# FASCICULE DE BREVET EUROPEEN

(11) **EP 2 022 696 B1**
(45) Date de publication et mention de la délivrance du brevet: **10.02.2010**
(21) Numéro de dépôt: 08354049.2
(22) Date de dépôt: 03.07.2008
(51) Int. Cl.: B61B 12/06

(54) **Dispositif de guidage d'un câble aérien d'une installation de remontée mécanique comportant des moyens d'arrêt automatique de l'installation**
Vorrichtung zur Führung einer Seilbahn einer mechanischen Aufstiegsanlage mit automatischen Haltemitteln für die Anlage
Device for guiding an overhead cable of a mechanical ski lift installation comprising means for automatically stopping the installation

(30) Priorité: 10.08.2007 FR 0705820
(43) Date de publication de la demande: 11.02.2009
(73) Titulaire: Pomagalski, 38340 Voreppe (FR)
(72) Inventeur: Triolier, Thierry, 38500 Voiron (FR); Bonifat, Laurent, 38500 La Buisse (FR)
(74) Mandataire: Hecké, Gérard

(56) Documents cités:
- EP-A- 0 771 709
- CH-A5- 683 414
- FR-A- 1 303 498

## Description

### Domaine technique de l'invention

L'invention est relative à un dispositif de guidage d'un câble aérien d'une installation de remontée mécanique dans laquelle ledit câble est entraîné par une poulie motrice mise en mouvement par un moteur d'entraînement, ledit dispositif comprenant un balancier muni de galets rotatifs de guidage du câble montés à rotation sur un châssis-porteur selon des axes de rotation échelonnés le long du châssis-porteur selon une direction longitudinale du balancier parallèle à la direction du câble, chaque galet rotatif de guidage comprenant :
- un corps de galet délimitant à sa périphérie une gorge annulaire,
- un bandage à coefficient de frottement élevé logé dans la gorge du corps de galet.

Le dispositif comporte, associés à au moins l'un desdits galets, des moyens de détection automatique d'un seuil prédéterminé d'usure du bandage dudit galet associé, et des moyens d'arrêt automatique dudit moteur d'entraînement lorsque ledit seuil est détecté.

### État de la technique

Dans les installations de remontée mécanique du type télésiège ou télécabine, le câble aérien est guidé et maintenu à chaque pylône par un dispositif de guidage comprenant un balancier inférieur à galets rotatifs de support et de guidage du câble lors de son défilement et/ou par un balancier supérieur à galets rotatifs de compression et de guidage. Un balancier mixte comporte à la fois un balancier inférieur et un balancier supérieur. Ces différentes combinaisons de balanciers constituent différentes variantes de balanciers d'appui et de guidage du câble. L'invention se rapporte à la surveillance de tels balanciers, quelle que soit la variante.

Les pylônes sont répartis entre les stations de départ et d'arrivée de l'installation. Des sièges et/ou des cabines sont fixés au câble par des pinces d'accrochage fixes ou débrayables. Les galets rotatifs du balancier sont généralement associés par paires en étant montés aux extrémités de poutres primaires, articulées dans leur partie médiane aux extrémités de poutres secondaires, elles-mêmes montées de la même manière sur des poutres tertiaires, et ainsi de suite selon le nombre de galets. La dernière poutre est montée articulée dans sa partie médiane à une potence de la structure porteuse du pylône. L'ensemble de ces poutres élémentaires (primaires, secondaires, tertiaires etc...) constitue un châssis-porteur du balancier.

Un galet se compose classiquement d'un corps de galet muni d'un alésage central pour le montage d'un axe de rotation relié au châssis-porteur du balancier. Le corps de galet délimite à sa périphérie une gorge annulaire de logement d'un bandage à coefficient de frottement élevé destiné à guider latéralement le câble lors de son défilement.

Pour un balancier d'appui et de guidage, quelle que soit sa variante de réalisation (inférieur, supérieur ou mixte), lors de la rotation des galets, le défilement du câble occasionne l'usure des bandages des galets et donc leur remplacement après un certain temps d'utilisation. L'état d'usure des bandages est vérifié selon une périodicité prédéterminée imposée par les règlements administratifs. Au cours de la vérification, si le bandage présente une usure suffisante, il faut le remplacer, sinon il faut réitérer la même opération après un temps d'utilisation supplémentaire.

Parallèlement à cette usure normale des bandages, il existe un risque perpétuel pendant l'utilisation d'un balancier qu'au moins l'un de ses galets rotatifs se bloque en rotation pour une raison quelconque. Dans une telle situation exceptionnelle, le mouvement de défilement du câble par rapport au galet bloqué provoque une usure très rapide du bandage logé dans la gorge du corps de galet : la dégradation du bandage est localisée au seul endroit du bandage où le frottement avec le câble se produit et la rapidité de la dégradation du bandage est beaucoup plus élevée que dans le cas normal d'utilisation. Il en résulte donc un risque très important que le bandage du galet bloqué en rotation s'use suivant toute son épaisseur à l'endroit du frottement avec le câble avant l'échéance suivante de la vérification normale périodique par le personnel d'entretien. Dans ce cas, le câble va provoquer en retour une détérioration du corps du galet bloqué, lequel produira une usure irréversible et dangereuse du câble lui-même. Un tel risque n'est pas satisfaisant pour les exploitants, tant pour les coûts de remplacement des pièces détériorées que pour la sécurité générale de l'installation de remontée mécanique.

Le document EP0771709 décrit un dispositif de guidage équipé de moyens de détection automatique du mouvement du câble dans un galet associé, par rapport à une position normale du câble. Ce mouvement peut résulter de grands vents latéraux ou d'une usure du bandage du galet. En cas de mouvement atteignant une valeur prédéterminée par rapport à la position normale, des moyens de coupure reliés aux moyens de détection assurent l'arrêt de défilement du câble. La détection automatique est réalisée par analyse d'un signal de tension de sortie d'un convertisseur magnétoélectrique placé dans un champ magnétique généré entre le câble et une source magnétique placée sous le convertisseur. La sortie du convertisseur est reliée à un circuit électrique de coupure automatique. Les moyens de détection sont donc réalisés à distance, sans contact avec le câble ni action mécanique, par des moyens électromagnétiques mettant en oeuvre une source magnétique en dessous du câble générant un flux magnétique dirigé vers le câble, et un convertisseur magnétoélectrique interposé entre le câble et la source magnétique.

Mais la détection ne dépend que du flux magnétique mesuré en continu par le convertisseur magnétoélectrique. Or le champ, et donc la valeur de son flux, peuvent être sujets à des perturbations extérieures ou peuvent varier à cause de problèmes au niveau de la source magnétique. Par exemple le flux magnétique peut diminuer en cas de démagnétisation de l'aimant permanent lorsque la source magnétique est constituée par un aimant permanent. Il en résulte que le flux magnétique peut subir des variations indépendantes de celles dues aux changements de la position réellement occupée par le câble. La fiabilité de la détection n'est donc pas maximale par manque de corrélation directe avec la position physique du câble : le seuil d'usure peut être faussement détecté bien que le câble n'ait pas encore atteint réellement la position correspondant au seuil d'usure du bandage, ou, au contraire, il est possible que le seuil d'usure ne soit pas détecté bien que le câble ait atteint réellement la position correspondant au seuil d'usure du bandage.

### Objet de l'invention

L'objet de l'invention consiste à réaliser un dispositif de guidage qui ne présente pas les inconvénients de l'art antérieur, permettant notamment d'offrir une sécurité et une fiabilité améliorées.

Le dispositif selon l'invention est remarquable en ce que les moyens de détection automatique sont constitués par un élément électriquement conducteur isolé électriquement par rapport au balancier et lié à ce dernier par des moyens de fixation, dans une position transversale où le câble vient automatiquement en contact avec ledit élément lorsque le bandage du galet associé atteint le seuil prédéterminé d'usure.

L'invention a pour vocation d'utiliser le changement de potentiel électrique (mise à la masse) de l'élément électriquement conducteur directement provoqué par le contact mécanique entre ce dernier et le câble, lequel contact mécanique apparaît automatiquement (compte tenu de la position transversale de l'élément électriquement conducteur) lorsque le seuil d'usure du bandage est atteint. Il en résulte une fiabilité absolue de la détection, les moyens étant électromécaniques.

Lorsque le seuil d'usure prédéterminé est détecté par les moyens de détection associés à un galet rotatif bloqué en rotation grâce au contact mécanique du câble, les moyens d'arrêt associés à ce même galet provoquent automatiquement la coupure du moteur d'entraînement. Il en résulte l'arrêt du mouvement de défilement du câble par rapport au bandage du galet bloqué. Ce fonctionnement automatique de ces deux types de moyens provoque donc l'arrêt du câble bien avant que le corps de galet du galet bloqué, et le câble lui-même, ne soient détériorés.

D'autres caractéristiques techniques peuvent être utilisées pour le dispositif :
- l'élément électriquement conducteur présente une forme générale d'entonnoir ouvert aux extrémités longitudinales, et possédant un fond plat et deux bords latéraux relevés et convergents en direction du fond,
- le fond plat est incliné suivant la direction longitudinale,
- les moyens d'arrêt automatique comportent une borne électrique électriquement liée à l'élément électriquement conducteur et assurant la connexion d'une cosse fixée à une extrémité d'un fil électriquement conducteur dont l'autre extrémité est connectée à un système électrique assurant la coupure de l'alimentation du moteur d'entraînement lorsque le câble vient en contact avec ledit élément électriquement conducteur,
- les moyens de fixation comportent un pied transversal métallique électriquement conducteur soudé à l'élément électriquement conducteur et fixé sur une plaque de support montée sur une poutre transversale fixée au balancier, la fixation du pied transversal étant réalisée à l'aide de boulons associés à des écrous, une première rondelle électriquement isolante étant intercalée entre la plaque de support et le pied transversal et une deuxième rondelle électriquement isolante étant intercalée entre le pied et la tête des boulons
- l'élément électriquement conducteur est disposé dans le plan médian du corps du galet associé.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 représente un exemple de dispositif de guidage selon l'invention, en vue de côté selon une coupe latérale au niveau d'un galet rotatif,
- la figure 2 représente, en vue de face, une partie du dispositif de la figure 1,
- la figure 3 est une vue de côté du dispositif des figures précédentes,
- la figure 4 est une vue de dessus de la partie de dispositif illustrée à la figure 2,
- la figure 5 illustre le dispositif des figures précédentes, selon le plan de coupe transversal discontinu A-A de la figure 2.

### Description d'un mode préférentiel de l'invention

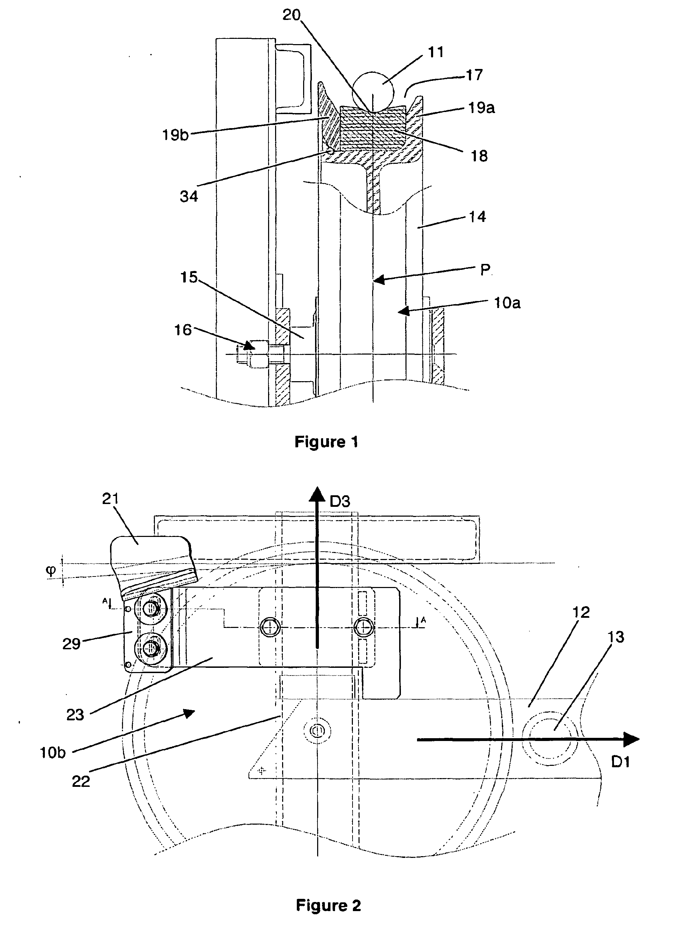

Les figures 1 à 5 illustrent un exemple de dispositif de guidage d'un câble aérien 11 d'une installation de remontée mécanique conforme à l'invention. Le dispositif de guidage comprend un balancier d'appui et de guidage du câble 11 tel que décrit ci-dessous. La figure 1 illustre une coupe latérale d'un premier galet rotatif 10a du balancier d'appui et de guidage. Les figures 2 à 5 représentent un deuxième galet rotatif 10b du balancier, identique au premier galet 10a. Les galets 10a, 10b sont montés aux extrémités d'une poutre primaire 12. Le deuxième galet 10b est disposé en amont du premier galet 10a suivant le sens de défilement du câble 11. La poutre primaire 12 est articulée dans sa partie médiane aux extrémités d'une poutre secondaire (non représentée). La poutre primaire 12 est montée à pivotement libre autour d'un axe de pivotement 13 de forme cylindrique solidaire de la poutre secondaire par tout moyen de fixation adapté tel qu'un système vis-écrou. La poutre secondaire est elle-même montée de la même manière sur une poutre tertiaire (non représentée), et ainsi de suite selon le nombre de galets. La dernière poutre est montée articulée dans sa partie médiane à une potence de la structure porteuse (non représentée) du pylône.

L'ensemble des poutres élémentaires du balancier (primaires 12, secondaires, tertiaires etc...) forme le châssis-porteur du balancier. La poutre primaire 12 représentée ne constituent donc qu'une partie du châssis-porteur. De cette manière, à l'image des galets 10a, 10b, l'ensemble des galets rotatifs (en nombre variable en fonction du nombre de poutres élémentaires) du balancier sont montés à rotation sur le châssis-porteur selon des axes de rotation parallèles échelonnés le long du châssis-porteur selon une direction longitudinale D1 (voir flèche sur la figure 2) du balancier qui est parallèle à la direction du câble 11.

De manière classique dans une installation de remontée mécanique, le câble 11 auquel sont suspendus les véhicules (cabines, sièges) transportant les passagers de l'installation est entraîné par une poulie motrice logée dans une station et mise en mouvement par un moteur d'entraînement (non représenté) de type électrique.

Le balancier d'appui et de guidage partiellement représenté sur les figures 1 à 5 est un balancier de type inférieur : les deux galets rotatifs de guidage 10a, 10b représentés sont donc des galets rotatifs de support et de guidage du câble 11. Indifféremment, la suite de la description pourrait être adaptée à un balancier d'appui et de guidage du type supérieur qui serait muni de galets rotatifs de compression et de guidage du câble.

Sur la figure 1, le galet 10a comporte un corps de galet 14 comprenant un alésage central, dans lequel est monté un axe de rotation 15 du galet 10a, solidaire de la poutre primaire 12 par un système vis-écrou 16. Le corps de galet 14 est monté fou à rotation autour de l'axe de rotation 15 par l'intermédiaire de jeux de roulements, par exemple du type roulements à billes ou autre.

Le corps de galet 14 délimite une gorge annulaire 17 à sa partie périphérique, présentant sensiblement la forme d'un U. Un bandage 18 à coefficient de frottement élevé est logé à l'intérieur de la gorge 17, pour guider latéralement le câble 11 pendant son défilement lors de la rotation du galet 10a.

La gorge 17 est délimitée par un premier bord 19a, constituant l'extrémité du corps de galet 14 et par un deuxième bord 19b disposé en regard du pylône et restant fixé au corps de galet 14 lors du démontage du galet 10a, pour le remplacement du bandage 18. Une rondelle élastique 34 permet de maintenir solidement la liaison entre le deuxième bord 19b de la gorge 17 et le bandage 18.

Le bandage 18 est en matériau polymère, de préférence en caoutchouc ou autre matériau élastomère, et remplit toute la largeur de la gorge 17 du corps de galet 14. Le bandage 18 comporte, de préférence, une empreinte 20, réalisée sur toute la périphérie du bandage 18 et destinée à épouser la forme du câble 11, lors de son positionnement sur le bandage 18 et lors de son défilement autour du galet 10a.

De manière classique, le galet 10a comporte un anneau de repérage (non représenté), inséré au coeur du bandage 18 et jouant le rôle de moyens de repérage visuel de l'usure du bandage 18. Ainsi, quand l'anneau de repérage apparaît à la surface supérieure du bandage 18, cela signifie que toute l'épaisseur du bandage 18 située au-dessus de l'anneau a été usée par les différents frottements du câble et qu'il est nécessaire de remplacer le bandage 18 et/ou le galet 10a.

Le bandage 18 est réalisé, par exemple, par un enroulement de bandes successives de caoutchouc à l'intérieur de la gorge 17. L'anneau de repérage est inséré entre deux bandes de caoutchouc successives, pour être dissimulé au coeur du bandage 18.

Ainsi, un tel galet 10a muni d'un anneau de repérage inséré au coeur du bandage 18 permet de visualiser rapidement, d'un seul coup d'oeil, si un niveau d'usure du bandage 18 a été dépassé ou non, de sorte que le démontage du galet 10a s'effectue uniquement quand le remplacement du bandage 18 est nécessaire.

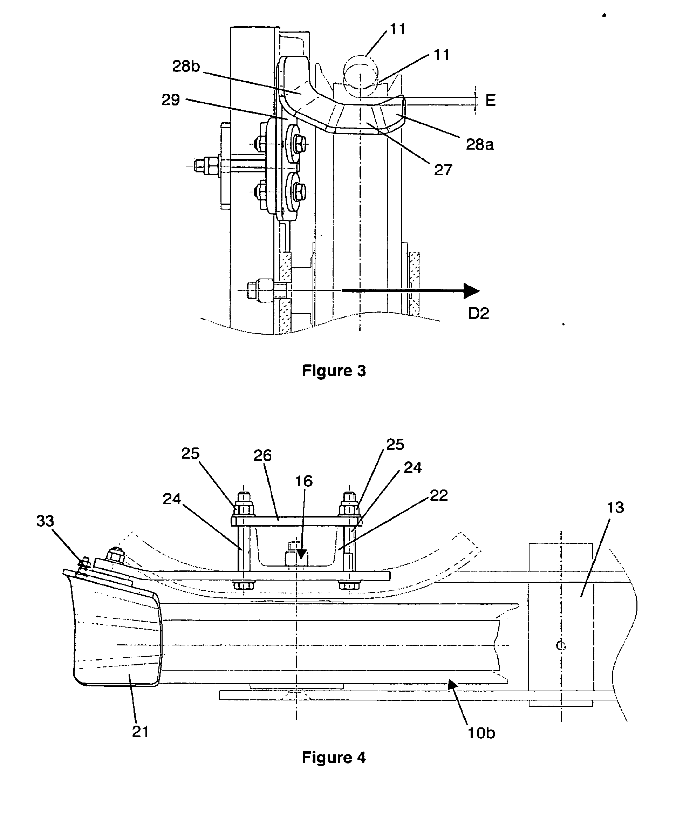

Le dispositif de guidage, dont seule une partie est représentée sur les figures 2 et 4, est équipé en outre de moyens de détection automatique d'un seuil prédéterminé d'usure du bandage 18 du galet rotatif 10b. Autrement dit, les moyens de détection automatique sont associés au galet rotatif 10b afin de détecter automatiquement que le bandage 18 de ce galet 10b a atteint un seuil prédéterminé d'usure. De tels moyens sont à distinguer de l'anneau de repérage inséré dans le bandage 18 du galet 10b. L'anneau de repérage permet uniquement à un agent d'entretien de visualiser, lors des opérations de maintenance, si un niveau d'usure prédéterminé (en fonction du positionnement de l'anneau dans l'épaisseur du bandage 18) est dépassé ou non. L'anneau de repérage ne remplit aucune fonction de détection. Au contraire, de tels moyens de détection automatique assurent eux-mêmes la détection d'un seuil d'usure prédéterminé. D'ailleurs, le seuil d'usure que les moyens de détection sont destinés à détecter peut être très différent du niveau d'usure que traduit l'apparition visuelle de l'anneau de repérage. En particulier, le seuil d'usure destiné à être détecté par les moyens de détection correspond à un état d'usure du bandage 18 beaucoup plus avancé que l'état d'usure atteint par le bandage 18 lors de l'apparition visuelle de l'anneau de repérage.

Dans l'exemple décrit, les moyens de détection sont constitués par un élément électriquement conducteur 21 longitudinalement disposé (dans la direction longitudinale D1) le long du câble 11, latéralement disposé (dans une direction latérale D2) dans le plan médian P du corps de galet 14 du galet 10b associé à ces moyens de détection, et transversalement disposé (dans une direction transversale D3) dans une position transversale où le câble 11 vient automatiquement en contact avec ledit élément 21 lorsque le bandage 18 du galet 10b associé atteint le seuil prédéterminé d'usure. La direction latérale D2 du balancier est parallèle aux axes de rotation de l'ensemble des galets rotatifs du balancier, en particulier parallèle aux axes de rotation des galets 10a, 10b (voir flèche sur la figure 3). La direction perpendiculaire à la direction longitudinale D1 et à la direction latérale D2 correspond à la direction transversale D3 du balancier (voir flèche sur la figure 2). Un tel élément électriquement conducteur 21 peut être prévu à demeure lors de la construction du balancier grâce à des moyens de fixation permanents, ou peut être rapporté sur le balancier par des moyens de fixation amovibles quelconques et adaptés. Dans tous les cas, les moyens de fixation assurent l'isolation électrique de l'élément conducteur 21 par rapport au balancier.

Sur les figures 2 à 5, l'élément électriquement conducteur 21 est rapporté au-dessus de la poutre primaire 12 du balancier par des moyens de fixation amovibles comportant une poutre transversale 22 de section en U montée fixement sur le balancier à l'extrémité de la poutre primaire 12 à laquelle est montée le galet 10b. La poutre transversale 22 est perpendiculaire à la poutre primaire 12 et parallèle au plan médian P du corps de galet 14 du galet 10b. La poutre transversale 22 est fixée par l'intermédiaire du système vis-écrou 16 assurant aussi la fixation de l'axe de rotation 15.

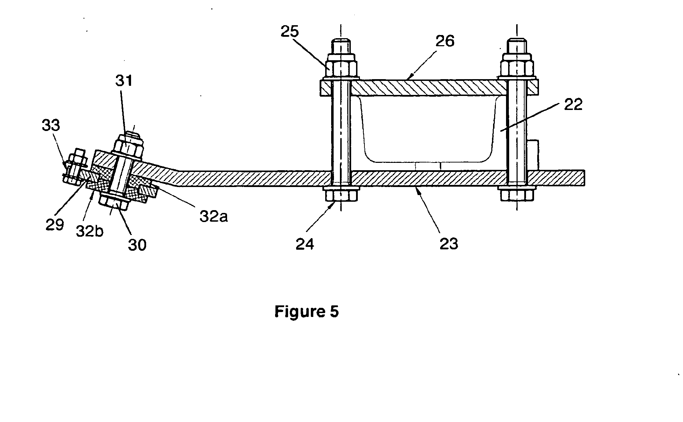

Les moyens de fixation comportent en outre une plaque de support 23 montée le long de la poutre transversale 22 pour s'étendre parallèlement au plan médian P en direction de l'amont (par rapport au sens de défilement du câble 11) du galet 10b suivant la direction D1. La fixation de la plaque de support 23 sur la poutre transversale 22 est réalisée à l'aide de deux boulons de fixation 24 et de deux écrous 25 associés. Les boulons de fixation 24 s'étendent suivant la direction latérale D2 et sont disposés de chaque côté de la poutre transversale 22. Le vissage des écrous 25 engagés sur les boulons de fixation 24 assure le serrage de la poutre transversale 22 entre la plaque de support 23 et une contre-plaque 26 (voir figures 4 et 5).

En référence aux figures, l'élément électriquement conducteur 21 présente une forme générale d'entonnoir ouvert aux extrémités longitudinales, et possédant un fond plat 27 et deux bords latéraux 28a, 28b relevés et convergents en direction du fond 27. Le bord latéral 28b est celui qui est disposé du côté de la poutre transversale 22. Le fond plat 27 est incliné suivant la direction longitudinale D1 du balancier. Autrement dit le fond plat 27 s'approche du câble 11 en s'approchant du galet rotatif 10b associé : l'extrémité longitudinale de l'élément 21 la plus proche de l'axe de rotation 15 suivant la direction longitudinale D1 est plus proche du câble 11 suivant la direction transversale D3 que l'extrémité longitudinale opposée de l'élément 21. L'espace E séparant le câble 11 et l'extrémité longitudinale de l'élément 21 la plus proche de l'axe de rotation 15 suivant la direction longitudinale D1 détermine la valeur du seuil d'usure prédéterminé. Le réglage de l'espace E se pratique par ajustement de la position transversale de l'élément électriquement conducteur 21. Ce positionnement transversal doit tenir compte de l'angle de déviation ϕ éventuel du câble 11, lequel angle doit toujours être inférieur à 3,5° (voir figure 2). La figure 3 représente l'espace E mesuré à partir du câble 11 lorsque ce dernier présente un angle de déviation ϕ maximal. La figure 3 illustre également la coupe latérale du câble 11 lorsque le câble ne présente pas de déviation ϕ.

L'élément électriquement conducteur 21 est fixé à la plaque de support 23 par l'intermédiaire d'un pied transversal métallique 29 dont une extrémité est soudée au bord latéral 28b. La fixation du pied transversal métallique 29 sur la plaque de support 23 est réalisée à l'aide de deux boulons 30 associés à deux écrous 31. La figure 5 illustre plus en détail cette fixation. Une première rondelle électriquement isolante 32a est intercalée entre la plaque de support 23 et le pied transversal métallique 29 et une deuxième rondelle électriquement isolante 32b est intercalée entre le pied transversal métallique 29 et la tête des boulons 30.

La figure 5 illustre également que le pied transversal métallique 29 est muni d'une borne électrique 33. Ainsi la borne électrique 33 est électriquement liée à l'élément électriquement conducteur 21 par l'intermédiaire du pied transversal métallique 29 et de la soudure du pied 29 sur l'élément 21 qui sont tous deux électriquement conducteur. La borne électrique 33 assure la connexion d'une cosse (non représentée) fixée à une extrémité d'un fil électriquement conducteur dont l'autre extrémité est connectée à un système électrique assurant la coupure de l'alimentation du moteur d'entraînement lorsque le câble 11 vient en contact avec l'élément électriquement conducteur 21. À titre d'exemple, le système électrique assurant la coupure de l'alimentation du moteur comporte un relais électromécanique ou électronique placé dans la partie commande du moteur d'entraînement et destiné à transmettre à la partie puissance un ordre de coupure de son alimentation électrique en cas de mise à la masse de l'élément 21. Cette mise à la masse est provoquée par le contact du câble 11 avec l'élément 21. Un tel système électrique peut être disposé à proximité du balancier ou à proximité du moteur d'entraînement. D'autre part, un système électrique donné peut être associé à une pluralité d'éléments électriquement conducteur 21.

Par conséquent, lorsque le galet rotatif 10b se bloque en rotation pendant un temps suffisant pour que le mouvement de défilement du câble 11 provoque une usure locale de son bandage 18 telle que le câble 11 se déplace transversalement d'une valeur supérieure à l'espace E, le câble 11 entre en contact avec l'extrémité longitudinale de l'élément électriquement conducteur 21 le plus proche de l'axe de rotation 15. Dans ce cas, le seuil d'usure prédéterminé est automatiquement détecté par l'élément électriquement conducteur 21. Par ce contact avec le câble 11, l'élément électriquement conducteur 21 est mis à la masse. Le système électrique (auquel l'élément 21 est relié par l'intermédiaire du pied transversal métallique 29, de la soudure, de la borne électrique 33, de la cosse et du fil relié à la cosse) constate ce changement de potentiel électrique de l'élément 21 et provoque automatiquement l'arrêt du moteur d'entraînement par coupure de son alimentation électrique. Il en résulte l'arrêt du mouvement de défilement du câble 11 par rapport au bandage 18 du galet 10b bloqué. Ce fonctionnement automatique provoque donc l'arrêt du câble 11 bien avant la détérioration du corps 14 du galet 10b à l'état bloqué et du câble 11 lui-même, de manière totalement fiable grâce à l'utilisation de moyens purement électromécaniques déclenchés par un contact mécanique du câble 11.

Le balancier d'appui et de guidage précédemment décrit, combiné à l'élément électriquement conducteur 21 et au système électrique auquel il est relié électriquement, constituent un exemple de réalisation de dispositif de guidage du câble aérien 11 selon l'invention, c'est-à-dire un dispositif de guidage utilisant des galets rotatifs et qui comporte, associés à au moins l'un desdits galets, des moyens de détection automatique d'un seuil prédéterminé d'usure du bandage dudit galet associé, et des moyens d'arrêt automatique du moteur d'entraînement du câble 11 lorsque ledit seuil est détecté. Au sein de ce dispositif de guidage, les moyens de détection automatique sont constitués par l'élément électriquement conducteur 21 tandis que les moyens d'arrêt automatique sont constitués par le système électrique assurant la coupure de l'alimentation du moteur d'entraînement et par la connexion électrique entre l'élément électriquement conducteur 21 et ledit système électrique.

Bien que les moyens de détection précédemment décrits sont associés uniquement au galet rotatif 10b, il est possible de prévoir que l'élément électriquement conducteur 21 puisse être associé simultanément aux galets 10a et 10b. Dans ce cas de figure, l'élément électriquement conducteur sera longitudinalement positionné entre les galets rotatifs 10a et 10b de manière à pouvoir indépendamment détecter que l'un ou l'autre des bandages 18 de ces deux galets 10a, 10b associés a atteint le seuil prédéterminé d'usure.

L'invention n'est pas limitée au mode de réalisation précédemment décrit. En particulier d'autres moyens d'arrêt automatique adaptés peuvent être utilisés. En particulier, le système électrique peut être quelconque dès lors qu'il remplit la fonction de coupure de l'alimentation électrique lorsque l'élément électriquement conducteur est mis à la masse électrique par contact avec le câble.

La fiabilité du dispositif de guidage est donc bonne car le blocage de l'un de ses galets provoque la coupure du mouvement de défilement du câble 11 bien avant que le corps 14 du galet 10b bloqué et le câble 11 ne soient détériorés. Il en résulte une sécurité concomitante de l'installation qui est améliorée.

## Revendications

1. Dispositif de guidage d'un câble aérien (11) d'une installation de remontée mécanique dans laquelle ledit câble (11) est entraîné par une poulie motrice mise en mouvement par un moteur d'entraînement, ledit dispositif comprenant un balancier muni de galets rotatifs (10a, 10b) de guidage du câble (11) montés à rotation sur un châssis-porteur selon des axes de rotation échelonnés le long du châssis-porteur selon une direction longitudinale (D1) du balancier parallèle à la direction du câble (11), chaque galet rotatif (10a, 10b) de guidage comprenant un corps de galet (14) délimitant à sa périphérie une gorge annulaire (17), et un bandage (18) à coefficient de frottement élevé logé dans la gorge (17) du corps de galet (14), dispositif comportant, associés à au moins l'un (10b) desdits galets (10a, 10b), des moyens de détection automatique (21) d'un seuil prédéterminé d'usure du bandage (18) dudit galet (10b) associé, et des moyens d'arrêt automatique (29, 33) dudit moteur d'entraînement lorsque ledit seuil est détecté,
dispositif **caractérisé en ce que** les moyens de détection automatique (21) sont constitués par un élément électriquement conducteur (21) isolé électriquement par rapport au balancier et lié à ce dernier par des moyens de fixation, dans une position transversale où le câble (11) vient automatiquement en contact avec ledit élément (21) lorsque le bandage (18) du galet (10b) associé atteint le seuil prédéterminé d'usure.

2. Dispositif selon la revendication 1, **caractérisé en ce que** l'élément électriquement conducteur (21) présente une forme générale d'entonnoir ouvert aux extrémités longitudinales, et possédant un fond plat (27) et deux bords latéraux (28a, 28b) relevés et convergents en direction du fond (27).

3. Dispositif selon la revendication 2, **caractérisé en ce que** le fond plat (27) est incliné suivant la direction longitudinale (D1) du balancier.

4. Dispositif selon l'une quelconque des revendications 1 à 3, **caractérisé en ce que** les moyens d'arrêt automatique (29, 33) comportent une borne électrique (33) électriquement liée à l'élément électriquement conducteur (21) et assurant la connexion d'une cosse fixée à une extrémité d'un fil électriquement conducteur dont l'autre extrémité est connectée à un système électrique assurant la coupure de l'alimentation du moteur d'entraînement lorsque le câble (11) vient en contact avec ledit élément électriquement conducteur (21).

5. Dispositif selon l'une quelconque des revendications 1 à 4, **caractérisé en ce que** les moyens de fixation comportent un pied transversal métallique (29) électriquement conducteur soudé à l'élément électriquement conducteur (21) et fixé sur une plaque de support (23) montée sur une poutre transversale (22) fixée au balancier, la fixation du pied transversal (29) étant réalisée à l'aide de boulons (30) associés à des écrous (31), une première rondelle électriquement isolante (32a) étant intercalée entre la plaque de support (23) et le pied transversal (29) et une deuxième rondelle électriquement isolante (32b) étant intercalée entre le pied (29) et la tête des boulons (30).

6. Dispositif selon l'une des revendications 1 à 5, **caractérisé en ce que** l'élément électriquement conducteur (21) est disposé dans le plan médian (P) du corps (14) du galet (10b) associé.

## Claims

1. A device for guiding an aerial rope (11) of a mechanical lift installation in which said rope (11) is driven by a driving pulley set in motion by a drive motor, said device comprising a sheave assembly equipped with roller sheaves (10a, 10b) for guiding the rope (11), mounted rotating on a support frame along axes of rotation staggered along the support frame in a longitudinal direction (D1) of the sheave assembly parallel to the direction of the rope (11), each guiding roller sheave (1 0a, 10b) comprising a sheave body (14) delineating an annular groove (17) at its periphery, and a band (18) with a high friction coefficient housed in the groove (17) of the sheave body (14), a device comprising automatic detection means (21), associated with at least one (10b) of said sheaves (10a, 10b), of a predefined wear threshold of the band (18) of said associated sheave (10b), and automatic stopping means (29, 33) of said drive motor when said threshold is detected,
a device **characterized in that** the automatic detection means (21) are formed by an electrically conducting element (21) electrically insulated with respect to the sheave assembly and connected to the latter by fixing means in a transverse position where the rope (11) comes automatically into contact with said element (21) when the band (18) of the associated sheave (10b) reaches the predefined wear threshold.

2. The device according to claim 1, **characterized in that** the electrically conducting element (21) presents a general funnel shape open at the longitudinal ends and having a flat bottom (27) and two raised side edges (28a, 28b) convergent in the direction of the bottom (27).

3. The device according to claim 2, **characterized in that** the flat bottom (27) is inclined in the longitudinal direction (D1) of the sheave assembly.

4. The device according to any one of claims 1 to 3, **characterized in that** the automatic stopping means (29, 33) comprise an electric terminal (33) electrically connected to the electrically conducting element (21) and performing connection of a spade connector fixed to one end of an electrically conducting wire the other end of which is connected to an electric system performing cutoff of the power supply of the drive motor when the rope (11) comes into contact with said electrically conducting element (21).

5. The device according to any one of claims 1 to 4, **characterized in that** the fixing means comprise an electrically conducting transverse metallic foot (29) welded to the electrically conducting element (21) and fixed on a support plate (23) mounted on a transverse beam (22) fixed to the sheave assembly, fixing of the transverse foot (29) being performed by means of bolts (30) associated with nuts (31), a first electrically insulating washer (32a) being inserted between the support plate (23) and the transverse foot (29) and a second electrically insulating washer (32b) being inserted between the foot (29) and the head of the bolts (30).

6. The device according to any one of claims 1 to 5, **characterized in that** the electrically conducting element (21) is arranged in the mid-plane (P) of the body (14) of the associated sheave (10b).

## Patentansprüche

1. Vorrichtung zum Führen eines Luftseils (11) einer mechanischen Aufstiegsanlage, bei der das Seil (11) von einer Antriebsrolle angetrieben wird, die von einem Antriebsmotor in Bewegung gesetzt wird, wobei die Vorrichtung einen Schwinghebel umfasst, der mit Drehrollen (10a, 10b) zur Führung des Seils (11) versehen ist, die drehbar auf ein Traggestell entlang von Drehachsen montiert sind, die entlang dem Traggestell in einer zur Richtung des Seils (11) parallelen Längsrichtung (D1) des Schwinghebels in gleichmäßigen Abständen angeordnet sind, wobei jede Führungs-Drehrolle (10a, 10b) einen Rollenkörper (14) umfasst, der an seinem Umfang eine ringförmige Auskehlung (17) begrenzt, und wobei ein Radreifen (18) mit einem hohen Reibungskoeffizienten in der Auskehlung (17) des Rollenkörpers (14) angeordnet ist, Vorrichtung, die, verbunden mit mindestens einer (10b) der Rollen (10a, 10b), Mittel zur automatischen Erfassung (21) eines vorbestimmten Schwellenwerts der Abnutzung des Radreifens (18) der zugehörigen Rolle (10b) sowie Mittel zum automatischen Abschalten (29, 33) des Antriebsmotors umfasst, wenn dieser Schwellenwert festgestellt wird,
Vorrichtung, die **dadurch gekennzeichnet ist, dass** die Mittel zur automatischen Erfassung (21) von einem elektrisch leitenden Element (21) gebildet werden, das gegenüber dem Radreifen elektrisch isoliert und mit diesem über Befestigungsmittel in einer transversalen Position verbunden ist, in der das Seil (11) automatisch in Kontakt kommt mit diesem Element (21), wenn der Radreifen (18) der zu ihm gehörenden Rolle (10b) den vorbestimmten Abnutzungsschwellenwert erreicht.

2. Vorrichtung nach Anspruch 1, **dadurch gekennzeichnet, dass** das elektrisch leitende Element (21) im Wesentlichen die Form eines an den Längsenden offenen Trichters hat und einen flachen Boden (27) und zwei erhöhte Seitenränder (28a, 28b) aufweist, die zum Boden (27) hin konvergieren.

3. Vorrichtung nach Anspruch 2, **dadurch gekennzeichnet, dass** der flache Boden (27) in Längsrichtung (D1) des Radreifens geneigt ist.

4. Vorrichtung nach einem der Ansprüche 1 bis 3, **dadurch gekennzeichnet, dass** die Mittel zum automatischen Abschalten (29, 33) eine Anschlussklemme (33) umfassen, die elektrisch mit dem elektrisch leitenden Element (21) verbunden ist und den Anschluss einer Hülse sicherstellt, die an einem Ende eines elektrisch leitenden Drahts befestigt ist, dessen anderes Ende mit einem elektrischen System verbunden ist, das die Unterbrechung der Stromversorgung des Antriebsmotors sicherstellt, wenn das Seil (11) in Kontakt mit dem elektrisch leitenden Element (21) kommt.

5. Vorrichtung nach einem der Ansprüche 1 bis 4, **dadurch gekennzeichnet, dass** die Befestigungsmittel einen elektrisch leitenden, transversalen Untersatz (29) aus Metall umfassen, der an das elektrisch leitende Element (21) geschweißt und an einer Tragplatte (23) befestigt ist, die an einen Querbalken (22) montiert ist, der an dem Schwinghebel befestigt ist, wobei die Befestigung des transversalen Untersatzes (29) mittels Schraubenbolzen (30) mit Muttern (31) erfolgt und wobei eine erste nicht leitende Scheibe (32a) zwischen die Tragplatte (23) und den transversalen Untersatz (29) und eine zweite nicht leitende Scheibe (32b) zwischen den Untersatz (29) und den Kopf der Schrauben (30) gesetzt ist.

6. Vorrichtung nach einem der Ansprüche 1 bis 5, **dadurch gekennzeichnet, dass** das elektrisch leitende Element (21) auf der Mittelebene (P) des Körpers (14) der entsprechenden Rolle (10b) angeordnet ist.
